# EUROPÄISCHE PATENTSCHRIFT

(11) **EP 0 868 891 B1**
(45) Veröffentlichungstag und Bekanntmachung des Hinweises auf die Patenterteilung: **22.08.2001**
(21) Anmeldenummer: 97105403.6
(22) Anmeldetag: 01.04.1997
(51) Int. Cl.: A61C 19/00, G06F 17/60

(54) **Verfahren zum Erstellen eines Behandlungsplanes für eine computergestützte zahnärztliche Behandlung**
Method for producing a treatment scheme for computer-assisted dental treatment
Procédé pour la production d'un plan de traitement pour un traitement dentaire assisté par ordinateur

(43) Veröffentlichungstag der Anmeldung: 07.10.1998
(73) Patentinhaber: Duelund, Harald, Dr. med., 94032 Passau (DE)
(72) Erfinder: Duelund, Harald, Dr. med., 94032 Passau (DE)
(74) Vertreter: Hofstetter, Alfons

(56) Entgegenhaltungen:
- EP-A- 0 703 541
- DE-A- 4 023 785
- US-A- 5 179 579
- THE INTERNATIONAL JOURNAL OF ORAL & MAXILLOFACIAL IMPLANTS, Bd. 11, Nr. 6, 1996, CAROL STREAM, US, Seiten 806-810, XP000672414 VERSTREKEN ET AL.: "Computer-Assisted Planning of Oral Implant Surgery: A Three-Dimensional Approach"

## Beschreibung

Die vorliegende Erfindung betrifft ein Verfahren zum Erstellen eines Behandlungsplanes für eine computergestützte zahnärztliche Behandlung. Beim heutigen Stand der zahnärztlichen Behandlungspraxis stehen verschiedene Computersysteme und -programme zur Verfügung, die eine Patientenstatistik mit Textaufzeichnung und auch Archivierung von Bildern, insbesondere von Röntgenbildern, ermöglichen. Ein handelsüblicher, mit derartigen zahnärztlichen Programmen ladbarer Personalcomputer (PC) steht in den meisten zahnärztlichen Praxen zur Verfügung. Mit Hilfe von für Zahnärzte zahlreich verfügbaren Computerprogrammen können auch bereits Behandlungspläne, Kostenvoranschläge und Abrechnungen gemäß zahnärztlicher Gebührenordnung vorgenommen werden.

Die vorliegende Erfindung liegt auf dem zuvor beschriebenen Gebiet, bezieht sich jedoch insbesondere auf die Planung und Behandlung von Zahn- und Knochenersatz und insbesondere auf die orale Implantat-Chirurgie.

Ist bei einem Patienten für infolge von Krankheit oder Beschädigung verlorene Zähne ein heute sinnvoller Ersatz möglich, so setzt diese Behandlung eine sorgfältige Vorbereitung und Beratung des Patienten voraus. Dies gilt insbesondere, wenn wegen des Einsatzes von Implantaten ein oder mehrere chirurgische Eingriffe erforderlich sind.

Zumeist erhalten Patienten, die diese Behandlung nötig haben, für sich und ihre Krankenkassen nach einer sorgfältigen Untersuchung einen mittels Computer erstellten Behandlungsplan und eine Gebührenvorausberechnung, für die zumeist wesentliche Einzelheiten von Hand in den Computer eingegeben werden müssen. Es ist auch bekannt, in diesen Computerausdruck einen Gebißbefund einzufügen, der mit den auf Computerdruckern üblicherweise verfügbaren Zeichen, wie Buchstaben, Zahlen, Strichen, Sternen usw., ein Gebißbild symbolisch simuliert. Diese "Bild"-Darstellung soll zwar das Verständnis der bevorstehenden Maßnahmen beim Patienten oder einem Krankenkassensachbearbeiter fördern. In der Praxis erschließt sich diese Darstellungsweise jedoch allenfalls dem Fachmann, während jeder Laie, wie es der betroffene Patient normalerweise ist, nur verwirrt wird.

Eine computergestützte Planung einer oralen Implantat-Chirurgie ist in der Fachzeitschrift "The International Journal of Oral & Maxillofacial Implants", Volume 11, Nr. 6, 1996, Seiten 806-810 beschrieben. Gemäß diesem Stand der Technik werden Bestandsdaten mit einem aufwendigen Röntgenscanner ("Somatom Plus") in der Gebißebene aufgenommen und hieraus ein digitales Bild erstellt, welches sich nur auf einem aufwendigen Rechner (IBM RISC RS6000 3AT) mit einem 256 MB großen Arbeitsspeicher weiterverarbeiten läßt. Das digitalisierte Bild wird in ein dreidimensionales Bild umgewandelt und in dieses auf einer Rechnerkonsole wiedergegebene Bild werden Implantate als dreidimensionale Implantatmodelle mit einem realen Durchmesser von 3,75 mm und einer realen Länge von 10 mm an geeigneter Stelle virtuell in das auf der Konsole abgebildete 3-D-Bild eingefügt. Durch Drehen und Schwenken des virtuellen Bildes kann ein sehr genauer Behandlungsplan aufgestellt werden, der aber nur eine Anleitung für den ausführenden Chirurgen ist.

Dieser Stand der Technik ist höchst aufwendig und für die normale Einrichtung einer Zahnarztpraxis ungeeignet.

Demgegenüber besteht die Aufgabe, für eine mit üblichen Geräten und einem heute üblichen Personalcomputer ausgerüstete Zahnarztpraxis eine Technik zur Verfügung zu stellen, die es ermöglicht, eine Implantatbehandlung mit einem auch für Laien-Patienten verständlichen Behandlungsplan vorzubereiten, die Kosten hierfür zu ermitteln und eine Diagnose so aufzubereiten, daß die Behandlung nach dieser Diagnose und dem Behandlungsplan ablaufen kann. Hierbei kann der Behandlungsplan für einen chirurgischen Ablauf in einer Zahnarztpraxis und einen auf die Implantate aufzusetzenden Zahnersatz in einer anderen Zahnarztpraxis so vorgegeben werden, daß im Interesse niedriger Kosten eine zahnärztliche Arbeitsteilung möglich ist.

Die erfindungsgemäße Lösung besteht aus mehreren Schritten.

Zunächst wird mit einem üblichen Röntgengerät eine übliche Rundum-Frontalaufnahme des Gebisses gemacht. Während dieser Aufnahme nimmt der Patient in an sich bekannter Weise eine exakt 5 mm große Meßkugel zwischen die Zähne, um die entstehende Röntgenaufnahme mit einer realen metrischen Bezugsgröße zu versehen. Statt der Meßkugel können auch andere Maßnahmen zur Skalierung vorgesehen werden, um das Röntgenbild mit einer realen Maßskala in metrischer Bezugsgröße zu versehen. Zusätzlich oder statt der Frontalaufnahme kann auch eine Aufnahme einer hierzu rechtwinklig verlaufenden Ebene, der sogenannten Horizontalebene als einziger, erster oder zusätzlicher Schritt angefertigt werden. Hierbei entsteht eine Draufsicht auf Ober- und Unterkiefer.

Als nächster Schritt wird diese zweidimensionale Röntgenaufnahme oder werden diese Aufnahmen jeweils in ein digitalisiertes Bild umgewandelt. Dies kann mit einem handelsüblichen Scanner oder zugleich mit der Röntgenaufnahme geschehen, wenn in der Zahnarztpraxis ein solches Röntgengerät zur Verfügung steht, welches sofort eine digitalisierte Aufnahme in einem gewünschten Datenformat liefert.

Das Datenformat soll erfindungsgemäß mit dem Datenformat eines handelsüblichen Zeichen- oder Bildverarbeitungsprogramms wie beispielsweise "Corel Draw"® oder ähnlichem übereinstimmen. Erfindungsgemäß wird nämlich in einem derartigen Bildverarbeitungsprogramm ein Schemabild eines Standardgebisses auf Vorrat gehalten. Als nächster Schritt der Erfindung werden die digitalisierte Röntgenaufnahme und dieses in einem Speicher abgelegte Schemabild des Standardgebisses so übereinandergebracht, daß das Röntgenbild mit dem aufgenommenen Befund, d.h. dem tatsächlichen Zustand des Patienten und der Lage der vorhandenen Zähne, dem Verlauf der Knochengrenzen von Ober- und Unterkiefer, der Lage der Nervenstränge in die Abbildung des Standardgebisses emuliert werden kann. Diese Bearbeitung der beiden Bilder kann von Hand am Bildschirm vorgenommen werden. Es kann aber auch eine automatische oder halbautomatische Transformation erfolgen. Das Zeichen- bzw. Bildverarbeitungsprogramm rechnet hierbei beim Überführen eines realen Bildes eines Zahnes aus der digitalisierten Röntgenabbildung per Mausklick in Größe und Form und Lage zur Okklusalebene in entsprechende Proportionen des entsprechenden Schemazahnes im Abbild des Standardgebisses um. Hierfür dient als Umrechnungsgröße die Proportion des realen Zahnes zur Meßkugel oder einer anderen metrischen Vergleichsgröße zu den im Bildverarbeitungsprogramm im Speicher abgelegten Proportionen des entsprechenden Standardzahnes. Bei der Bearbeitung des Bildes von Hand erfolgt diese Berechnung und Umwandlung, während der entsprechende Zahn aus dem digitalisierten Röntgenbild in die Standardabbildung bei niedergedrückter Maustaste im dargestellten Bild verschoben wird, bis dieser Zahn im Abbild des Standardgebisses seine Position und Form eingenommen hat.

Die Okklusalebene, das ist die Ebene, in der die Zähne von Oberund Unterkiefer aufeinandertreffen, ist im Schemabild des Standardgebisses ein horizontaler Strich und stellt im Schemabild die virtuelle Bezugsebene dar, zu der nach und nach für alle Zähne, wie oben beschrieben, ihre jeweilige Position im Abbild des Schemagebisses so wiedergegeben wird, wie sie in geänderten Proportionen gemäß der Befundaufnahme auch in Wirklichkeit eingenommen wird. Die seitlichen Abstände sind in die Darstellungsebene des Schemabildes abgewickelt, wie auch schon die Rundumaufnahme des Röntgenbildes die Darstellung der Zähne in eine zweidimensionale Ebene üblicherweise abgewickelt hat. Der Abstand zwischen Ober- und Unterkiefer ist allerdings in der schematisierten Darstellung zur besseren Verdeutlichung gegenüber der Okklusalebene auseinandergezogen.

Bei realen Aufnahmen in der Horizontalebene quer zur Okklusalebene entstehen zwei reale Bilder, eines gegen den Oberkiefer und eines gegen den Unterkiefer. Die Transformation dieser beiden Bilder in ein im Bildvortat vorhandenes Standardbild eines Ober- oder Unterkiefers kann die Lage der Zähne zueinander und die Kieferform einfach an den realen Aufnahmen übernommen werden oder in der realen Aufnahme verbleiben, da hier keine Projektion in eine andere Ebene erforderlich ist, wie bei der Frontalaufnahme. Aus dem Bildspeicher wird die standardisierte Größe der Abbildung übernommen und das reale Bild in diese Größen- und Lageverhältnisse übernommen. Auch für die Darstellung in diesen beiden horizontalen Ebenen stehen im Zeichenspeicher genügend Symbole zur Verfügung, die automatisch, halbautomatisch oder von Hand per Mausklick übernommen werden können.

Werden beide Darstellungen, in der horizontalen und der frontalen Ebene, gleichzeitig benutzt und verarbeitet, kann der Rechner die Korrelation zwischen beiden Darstellungen herstellen, so daß die textliche Beschreibung und Belegung der Schritte mit den im Speicher abgelegten Honorarsätzen nur einmal erfolgt, obwohl der betroffene Zahn oder die betroffene Behandlungsstufe in beiden Ebenen bildlich dargestellt ist.

Beim Übertragen der real aufgenommenen Zähne in die Position des Schemabildes können abgebildete oder diagnostizierte Veränderungen oder Defekte dadurch im Schemabild markiert werden, daß aus einem Zeichenvorrat in einem Speicher des Bildverarbeitungsprogramms entsprechende Symbole, wie "mit Füllung versehen", "wurzelbehandelt", "Zahn zerstört - muß gezogen werden", "Krone vorhanden" usw., übernommen werden, wodurch dann die schematisierte Befunddarstellung der Wirklichkeit anpaßt wird. Auch dies kann mit Mausklick von Hand vorgenommen werden. Selbstverständlich läßt sich auch dieser Bearbeitungsvorgang vom Rechenprogramm unterstützen oder ganz selbsttätig abarbeiten.

Wie die Zahnproportionen und -lagen mit Hilfe der Vergleichsmeßgrößen in das Schemabild übernommen wurden, lassen sich auch die Knochengrenzen der Kieferknochen in die Schemaabbildung proportional genau übertragen, um ein Schemabild wiederzugeben, welches zum Einfügen von Implantaten ausreichende Knochentiefen, die beim Patienten zur Verfügung stehen, sichtbar macht. Auch die Nervenbahnen im Unterkiefer werden in ihrer Lage im Knochen proportional übertragen, so daß bei der Aufstellung des Behandlungsplanes die Größe der Implantate im Verhältnis zu ihrem Abstand zu Nervenbahnen berücksichtigt werden kann.

Es entsteht so auf einfache Weise ein schematisiertes Befundbild des Patienten, das mit einer Legende versehen in den Behandlungsplan aufgenommen wird und auch für einen Laien in einer erkennbaren Weise im ausgedruckten Behandlungsplan verständlich wird.

Bevor jedoch dieser Ausdruck angefertigt wird, läßt sich der Behandlungsplan auf dem Bildschirm des gewöhnlichen PC mit dem erfindungsgemäß modifizierten Bildverarbeitungsprogramm vervollständigen. Hierfür wird auf dem Bildschirm das schematisierte Befundbild dupliziert, um in das duplizierte Befundbild bildliche Eintragungen der notwendigen Behandlungsschritte einarbeiten zu können. Im einfachen Fall, wenn beispielsweise genügend Knochensubstanz in den Kiefern zur Verfügung steht, werden beispielsweise alle notwendig werdenden zahnärztlichen Behandlungsschritte in das duplizierte Schemabild eingetragen, wobei auch solche Schritte markiert werden können, die mit der eigentlichen Implantatbehandlung nichts zu tun haben, aber notwendigerweise anstehen. Hierfür lassen sich bildhaft verständliche Symbole aus dem Symbolspeicher des abgewandelten Bildverarbeitungsprogramms abrufen und in das duplizierte modifizierte Schemabild übertragen. Selbstverständlich lassen sich insbesondere aus dem Zeichen- und Bildvorrat im erwähnten Speicher entsprechend dimensionierte Implantate als Abbildungen in die Schemadarstellung einfügen. Hierbei läßt sich der einzuhaltende Abstand zu Knochengrenzen oder Nervenbahnen genau berücksichtigen.

Dort, wo zum Beispiel die Knochensubstanz zu ergänzen ist, werden die entsprechenden Knochenlücken markiert und für eine Knochenregeneration im Bild bezeichnet, indem die entsprechenden Symbole aus dem Zeichen- und Bildvorrat des Programmspeichers aufgerufen und an die entsprechende Stelle der schematisierten Darstellung übertragen werden. Dies kann erforderlich machen, den Behandlungsplan in mehreren Stufen aufzustellen, nämlich dann, wenn nacheinander wegen der Knochenregeneration mehrere Behandlungsstufen erforderlich sind, wobei für jede Behandlungsstufe, ausgehend von der ursprünglichen Befundaufnahme, mehrere Schemadarstellungen im Behandlungsplan eingezeichnet werden müssen, die den stufenweisen Fortschritt der Behandlung wiedergeben. Von Stufe zu Stufe läßt sich dabei das Schemabild immer wieder duplizieren, um in dieses duplizierte Schemabild die nächsterforderlichen Schritte aufzunehmen.

Als weitere Ausgestaltung der Erfindung kann mit der bildhaften Aufarbeitung von Schemabildern durch rechnerisch-zeichnerische Umgestaltung des Schemabildes für jeden denkbaren und vorhersehbaren möglichen Behandlungsschritt, sobald er beispielsweise durch entsprechendes Aufrufen eines Symbols aus dem Bild- oder Symbolvorrat des Speichers simuliert wird, zugleich aus einem anderen Speicher eine textliche Beschreibung des Behandlungsschrittes aufgerufen und in den Behandlungsplan eingesetzt werden. Hierfür stellt die Erfindung einen entsprechenden Speicher mit Textstellen zur Beschreibung der Behandlungsschritte zur Verfügung. Diese im Textvorrat vorhandenen Textbausteine entsprechen der bildhaften Bearbeitung oder die bildhafte Bearbeitung löst die erforderlichen Textstellen aus, wobei eine bildhafte Veränderung mehrere Textbausteine aufrufen kann, die zahnärztlich erforderlich sind, wie beispielsweise, daß vor einer Extraktion Anästhesiemaßnahmen vorgenommen werden müssen.

Diese Textbausteine können weiterhin mit Gebührenposten verknüpft sein, die ebenfalls parallel in einem weiteren Speicher des Programms abgelegt sind, so daß der Behandlungsplan zugleich mit Bild, Bildlegende, Beschreibungstext und Kosten versehen werden kann, die sich aufsummieren lassen und wobei das ganze von einem Drucker möglichst farbig und damit für einen Laien verständlich ausgedruckt werden kann.

Weitere Einzelheiten, Merkmale und Vorteile der Erfindung ergeben sich aus der folgenden Beschreibung der Zeichnung.

Es zeigen:
- Fig. 1: ein schematisches Bild einer digitalisierten Rundum-Frontaufnahme,
- Fig. 2: die Emulation des Röntgenbildes in ein Schemabild,
- Fig. 3: ein Schemabild des ursprünglichen Ist-Zustandes mit eingezeichneten, abgeschlossenen, früheren Behandlungsmaßnahmen,
- Fig. 4: eine Auswahl aus Bildsymbolen im Bildspeichervorrat,
- Fig. 5: ein Schemabild mit einer Zielstufe des Behandlungsplans,
- Fig. 6: ein Schemabild, teilweise als Blockschaltbild, für den Ablauf der Diagnose und die Aufstellung eines Behandlungsplanes gemäß der vorliegenden Erfindung.
- Fig. 7: mit jeweils gegenübergestellten Abbildungspaaren (a bis h) die Darstellung der Schritte in einer Horizontalebene und
- Fig. 8: ein ausgedruckter Behandlungsplan ähnlich der Bezugszahl 150 in Fig. 6, jedoch mit der zusätzlichen Abbildung von Ober- und Unterkiefer in der Horizontalebene.

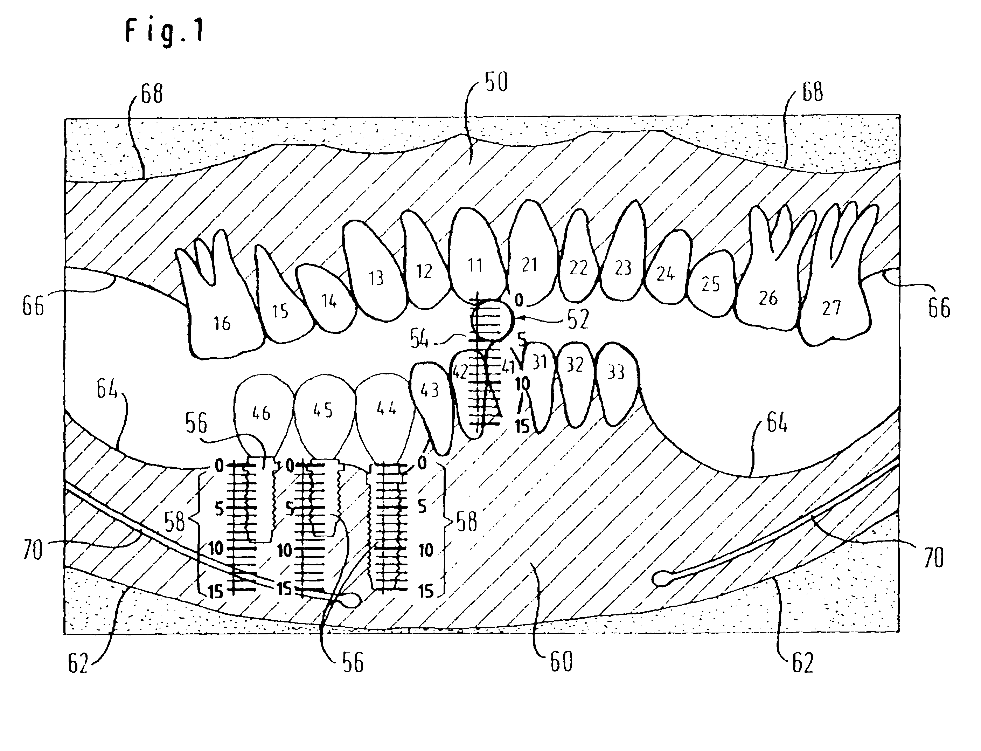

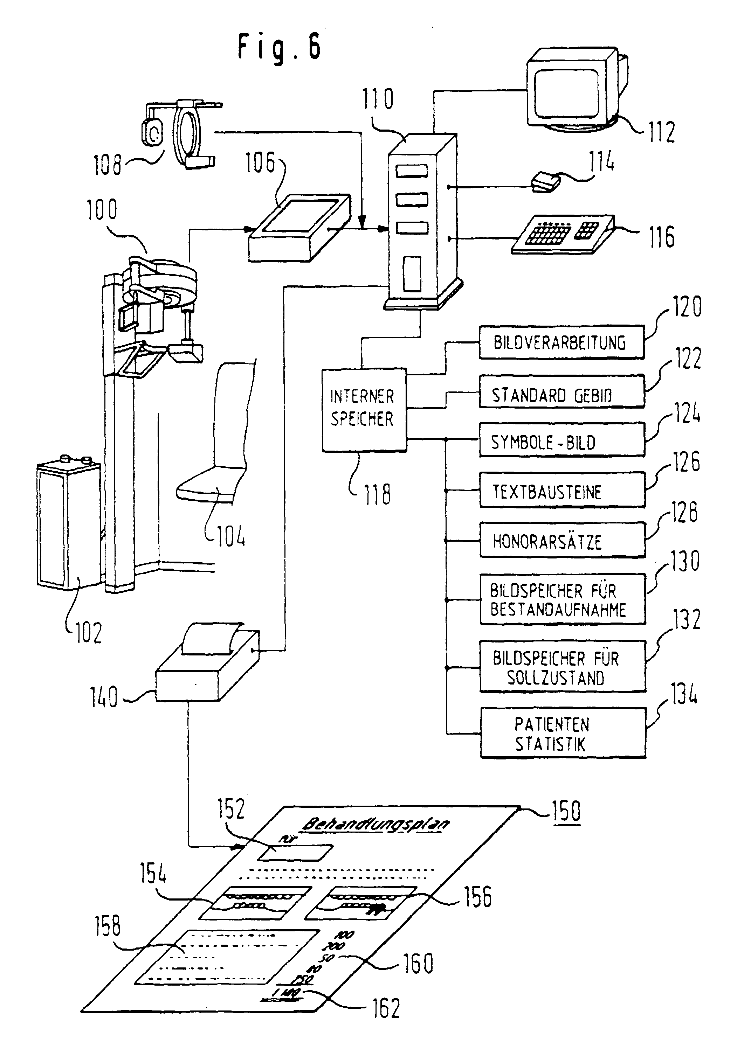

Die Figur 1 ist eine beispielhafte und schematische Darstellung einer Befundaufnahme mittels eines in der Zahnarztpraxis üblichen Röntgengeräts 100 (siehe Fig. 6). Es handelt sich um eine Rundumaufnahme von vorn gegen die Zähne. Selbstverständlich kann zusätzlich die hierzu im rechten Winkel liegende Querschnittsebene der Zähne gleichfalls aufgenommen werden, um mit entsprechenden Abbildungen den Behandlungsplan zu ergänzen.

Ein Oberkieferknochen 50 und ein Unterkieferknochen 60 sind mit der Röntgenaufnahme bereits in eine zweidimensionale Ebene abgewickelt dargestellt. Es handelt sich um eine digitalisierte Form des Röntgenbildes. Die Digitalisierung kann entweder aus der Röntgenaufnahme mittels eines Scanners 106 oder mit einem entsprechend ausgebildeten Röntgengerät, etwa einem intraoralen Sensor 108, geschehen, das bereits digitalisierte Bilder zur Darstellung der Röntgenaufnahme auf einer Konsole oder einem Bildschirm 112 eines Rechners 110 ermöglicht. Wichtig ist, daß das Bilddateiformat mit einem später verwendeten Bildverarbeitungsprogramm kompatibel ist.

Die im Oberkieferknochen 50 und im Unterkieferknochen 60 vorhandenen Zähne sind mit Bezugszahlen entsprechend dem Gebißschema nach dem FDI-System (Fédération Dentaire Internationale) oder nach DIN 13920 bezeichnet, die sich in den übrigen Figuren nach dem FDI-System auch für Fehlpositionen wiederfinden.

Bei der Röntgenaufnahme hält der Patient zwischen den Zähnen 11 und 31 eine röntgenschattengebende Kugel 52 von exakt 5 mm Durchmesser, die in dem Bild die Proportionen zwischen den im Bild abgreifbaren Dimensionen und den realen Dimensionen im Gebiß des Patienten vorgibt. Die Kugel kann üblicherweise aus Stahl, Titan oder Guttapercha sein, wobei eine Kugel aus Guttapercha den Vorteil hat, daß sie im Computertomogramm keine Streustrahlung erzeugt. Bei der Wiedergabe des digitalen Bildes wird auf die abgebildete Meß- oder Bezugskugel 52 eine Skala 54 so eingeblendet, daß die 5 mm des realen Kugelmaßes in einem ebenfalls eingeblendeten Meßmaßstab von 0 bis 15 mm eingefaßt sind und somit eine maßstabsgetreue Referenz für das Auge und den Rechner vorgeben.

Im vorliegenden Beispiel besitzt der Patient bereits drei Implantate 56 aus vorhergehenden Behandlungen, die aus genormten Werkstücken für die Zähne 44, 45 und 46 existieren. Da die Maße dieser Implantate 56 bekannt sind, können beispielsweise auch diese Implantate anstatt der Skala 54 oder als zusätzliche Skalen 58 dienen.

Ferner ist die untere Kontur 62 und die obere Kontur 64 des Unterkiefers 60 und die untere Kontur 66 sowie die obere Kontur 68 des Oberkiefers in einem Verlauf wiedergegeben, der dem tatsächlichen Gebiß des Patienten entspricht und der in der Abbildung gemäß Fig. 1 in die Bildebene abgewickelt ist. Schließlich sind die Lage und der Verlauf von Nervensträngen 70 im Unterkiefer proportional zur wirklichen Lage im Unterkiefer abgebildet.

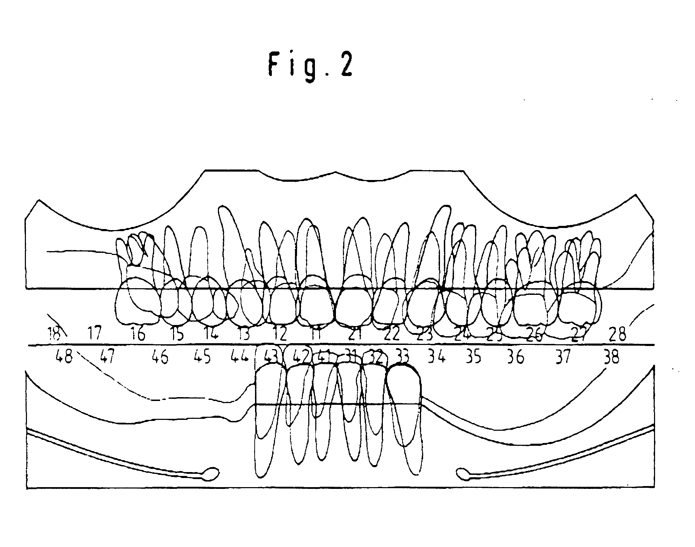

Diese als Bilddatei im Rechner 110 abgelegte und auf der Konsole 112 darstellbare Wiedergabe der Befundaufnahme läßt sich gemäß Fig. 2 in ein Bild eines Standardgebisses emulieren. Durch das Rechenprogramm wird aus dem digitalisierten Röntgenbild festgestellt, welche Zähne überhaupt noch vorhanden sind. Nicht mehr vorhandene Zähne werden durch das Programm oder von Hand per Mausklick ausgeblendet. Ebenso werden die Lage, Größe und Abstände der Zähne im jeweiligen Kiefer durch Abtasten der Konturen im Maßstab der Skalen 54 oder 58 oder interpoliert zwischen den Maßstäben mehrerer Skalen in das Schemabild übertragen. Gleiches findet für die Konturen 62 und 64 bzw. 66 und 68 der Knochen 50 bzw. 60 und die Lage der Nervenstränge 70 statt. Hierbei fährt der Rechner mittels Programm die entsprechenden digitalisierten Linien ab und richtet sie im Schemabild entsprechend ein. Für die im vorliegenden Beispiel festgestellten Implantate 56 entnimmt der Rechner aus einem im Speicher abgelegten Symbolvorrat ein entsprechendes Symbol für ein Implantat dieser Größe und fügt dieses Symbol in das Schemabild ein.

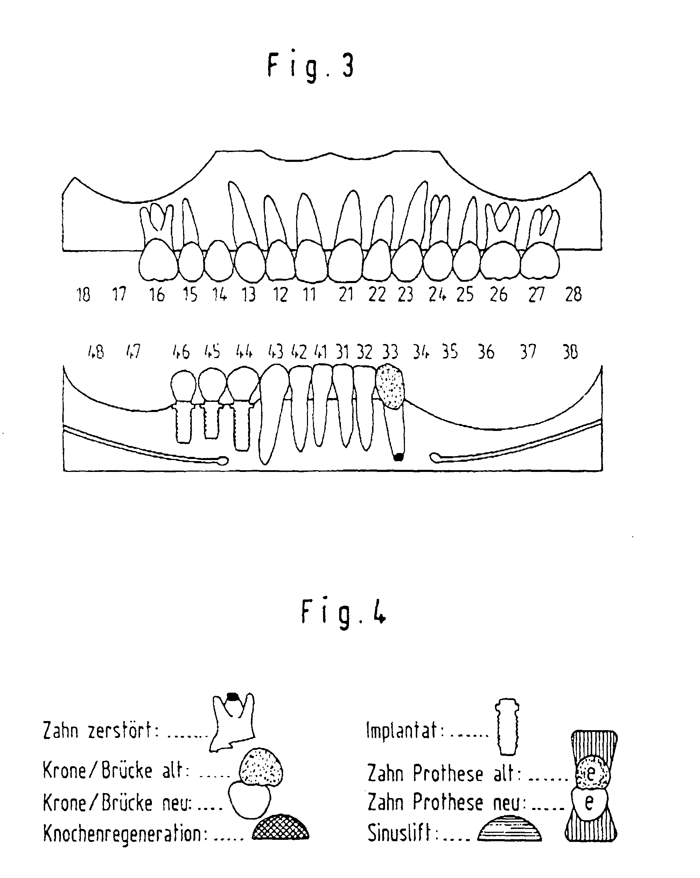

Die Fig. 3 gibt im wesentlichen das Schemabild des aufgenommenen Befundes wieder, welches später als Befundbild 154 (siehe Fig. 6) in den Behandlungsplan 150 aufgenommen wird.

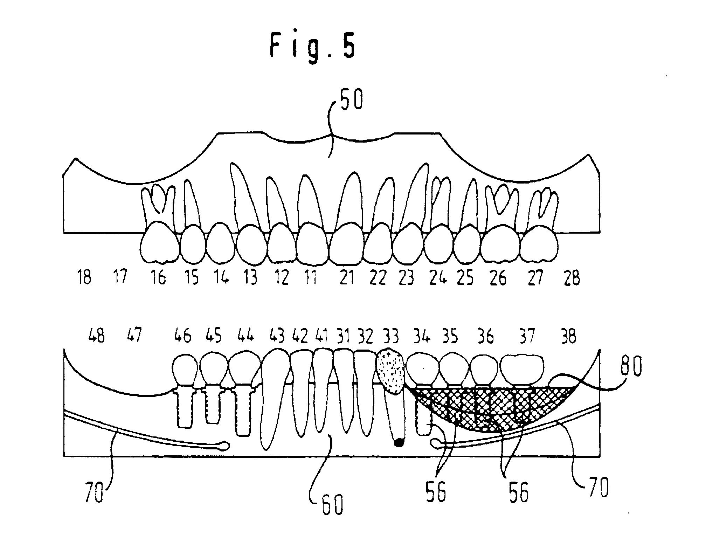

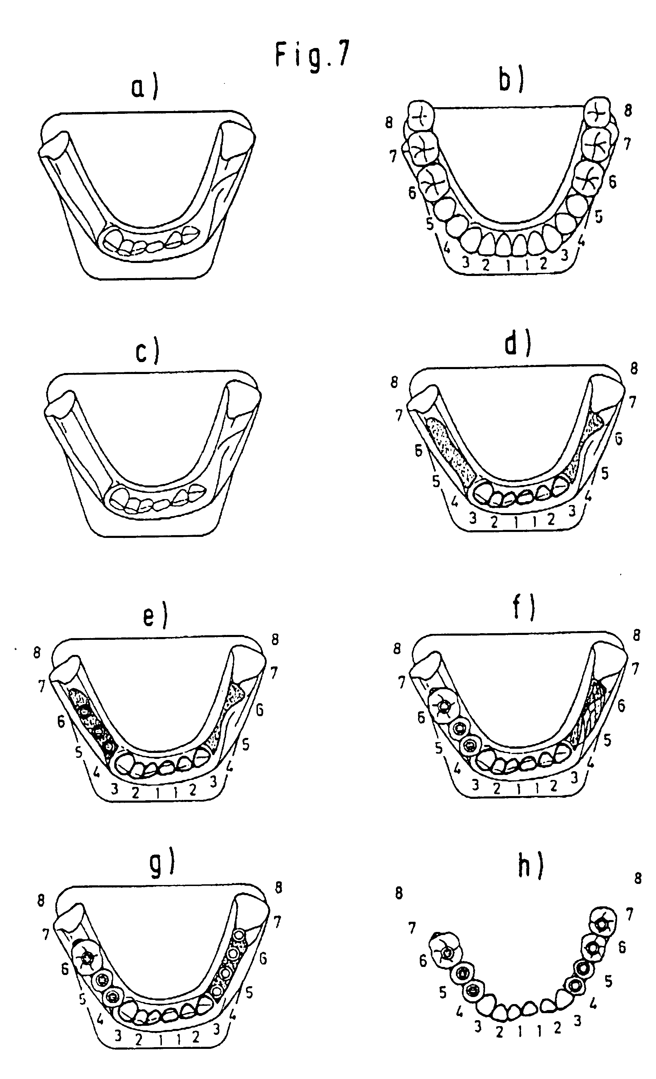

Die Fig. 5 zeigt das Bild des Behandlungszieles. Im vorliegenden Fall ist es das Behandlungsziel, im Unterkiefer 60 die Positionen 34 bis 37 wieder mit Zahnersatz zu besetzen, für die Implantate 56 erforderlich sind. Bevor jedoch Implantate eingefügt werden können, muß eine Knochenregeneration das bei der Befundaufnahme festgestellte Knochendefizit auffüllen. Dies ist heute mit verschiedenen Mitteln in zumeist mehreren Behandlungs-schritten möglich. In Fig. 5 ist der regenerierte Teil des Unterkiefers 60 mit einer gekreuzten Schraffur 80 dargestellt.

Um dieses Bild eines Behandlungsplanes gemäß Fig. 5 erzeugen zu können, benutzt der Zahnarzt die in Fig. 6 schematisch dargestellte Einrichtung. Hierbei ist das Rundum-Röntgengerät 100 bereits oben beschrieben. Der Patient nimmt üblicherweise auf einem Patientenstuhl 104 Platz, um die Röntgenaufnahme in üblicher Weise mit Hilfe eines Röntgensteuergeräts 102 herstellen zu können. Das Röntgengerät wird mit einem Scanner 106 digitalisiert oder der auf dem Patientenstuhl 104 sitzende Patient wird mit einem intraoralen Sensor 108 versehen, der mit geringerer Strahlenbelastung als bei der Herstellung eines Zwischenfilmes sofort ein digitales Bild an den Rechner 110 liefert.

Zunächst erscheint dieses eingescannte digitalisierte Bild auf der Konsole 112. Über ein Eingabegerät 116 einer üblichen Tastatur wird ein Bildverarbeitungsprogramm 120 aus dem internen Speicher 118 des Rechners 110 aufgerufen, der dem eingescannten Röntgenbild ein Standardgebiß-Bild unterlegt, das aus dem Speicher 122 abgerufen werden kann. Die Bildverarbeitung erfolgt dann gemäß der anhand der Fig. 2 vorgenommenen Beschreibung.

Die Bearbeitung kann entweder über die Eingabevorrichtung 116 oder von Hand über eine Maus 114 erfolgen und dabei vom modifizierten Bildverarbeitungsprogramm in der oben beschriebenen Weise unterstützt werden, oder die Emulierung erfolgt vom Programm gesteuert weitgehend oder vollständig selbsttätig. Bei der Emulierung werden Symbole aus dem Speicher 124 abgerufen, von denen einige beispielhaft in Fig. 4 dargestellt sind. Das Ergebnis der Bildverarbeitung ist in Fig. 3 schematisch dargestellt.

Es folgt dann die Planung der Behandlung, die in ein dupliziertes Bild des aufgenommenen Befundes eingearbeitet wird. Hierbei wird in der gleichen Weise vorgegangen wie zuvor beschrieben. Es entsteht ein Bild gemäß Fig. 5, das dem Behandlungsziel entspricht.

Im hier dargestellten Beispiel muß zunächst ein Knochenabbau oder -defizit im Unterkiefer 60 aufgefüllt werden, bis eine Knochensubstanz 80 im Gewebe des Unterkiefers 60 so aufgenommen ist, daß Implantate 56 eingesetzt werden können. Das fertige Behandlungszielbild 156 wird dann in den Behandlungsplan 150 eingefügt, was zunächst über die Tastatur 116 oder die Maus 114 auf der Konsole 112 geschieht. Zur Vervollständigung des Behandlungsplans werden am Rechner noch diejenigen Textbausteine entweder automatisch oder von Hand hinzugefügt, die die einzelnen Behandlungsschritte beschreiben, wobei die Textbausteine dem Speicher 126 entnommen werden. Gleichzeitig lassen sich die Honorarsätze aus dem Speicher 128 hinzufügen und die Behandlungskostensumme 162 hierbei errechnen. Zuvor sind in einem Bildspeicher 130 die Aufnahmen für den Bestand abgelegt worden und auch das Zielbild für den Sollzustand wird in einen gesonderten Speicherplatz 132 eingefügt. Vor dem Ausdrucken über einen Drucker 140 wird der Behandlungsplan mit den notwendigen Angaben aus der Patientenstatistik, die im Speicher 134 abgelegt ist, wie z.B. der Adresse und den für die Krankenkasse eventuell notwendigen Angaben, ergänzt.

Dann läßt sich mit einem Druckbefehl der Drucker 140 aktivieren, der möglichst ein Farbdrucker sein sollte, um das Befundbild 154 und das Behandlungszielbild 156 in einer für den Patienten besonders deutlichen Weise farbig ausdrucken zu können. Die Behandlungsschritte werden im Textfeld 158 ausgedruckt. Daneben erscheinen die Einzelposten 160 der Gebührensätze, die zusammen als Behandlungskostensumme 162 auf dem gedruckten Behandlungsplan 150 erscheinen.

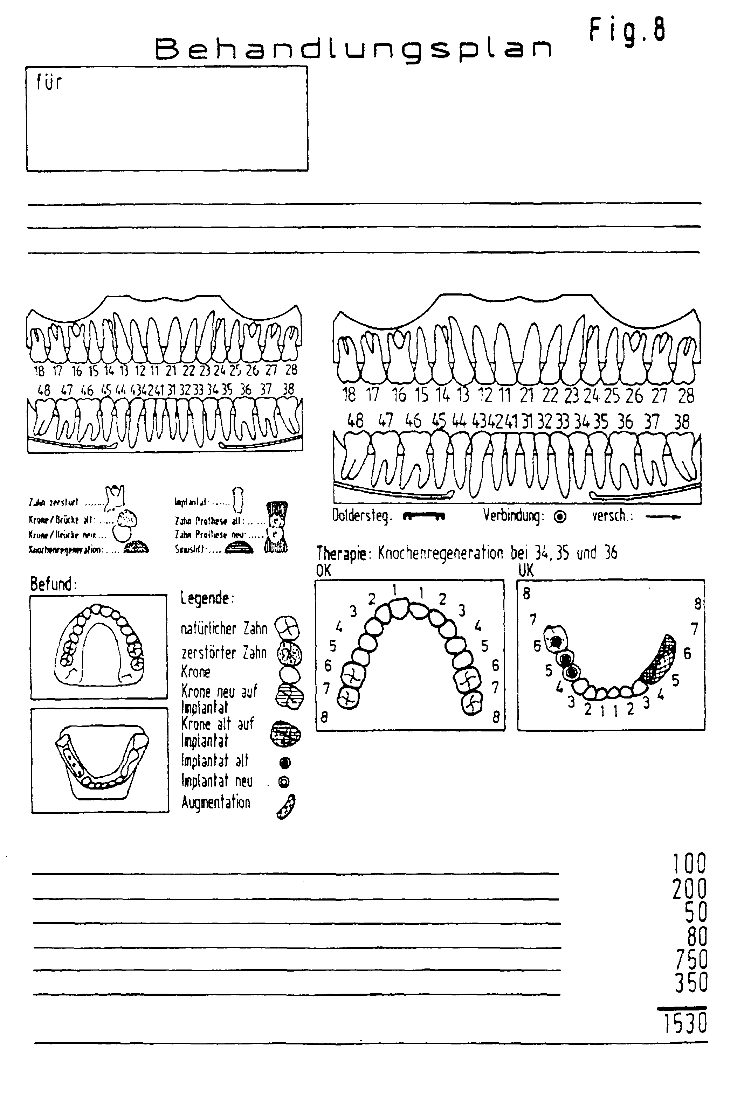

In ähnlicher Weise kann mit Aufnahmen und Bildverarbeitung in der Horizontalebene verfahren werden und zwar anstatt der Frontalaufnahme oder in Ergänzung zur Frontalaufnahme. Hierfür wird nachfolgend die Fig. 7 beschrieben.

Die Abbildung 7 a zeigt eine eingescannte Darstellung in dieser Horizontalebene, die mit einem Standard-Zahnbogen gemäß Abbildung 7 b durch die hier beschriebene Bildbearbeitung in dieser zweidimensionalen Ebene übereinander gebracht werden soll. Während dieser Bearbeitung wird die Abbildung 7 c in die Abbildung 7 d individualisiert. In der Praxis kann auf einem Farbbildschirm beispielsweise unter Verwendung unterschiedlicher Farben der zu behandelnden Bereiche, auf der linken Seite die fehlenden Zähne 4-6 und auf der rechten Seite von Abbildung 7 d ebenfalls die Positionen 4-6, zusätzlich farbig markiert werden. Die Diagnostik hat in diesem Beispiel ergeben, daß nicht nur die Zähne fehlen, sondern das Knochenangebot zu beachten ist. Während auf der linken Hälfte das Knochenangebot für Implantate ausreichend ist, besteht in der rechten Bildhälfte ein deutliches Knochendefizit, welches eine Implantation nur nach einer Knochenbehandlung zuläßt. Es werden also mehre Behandlungsstufen erforderlich werden, wofür auch die Bildbearbeitung in den Behandlungsplan in der obenbeschriebenen Weise aufgenommen wird.

Die Abbildung 7 e zeigt die mit eingesetzten Implantaten fertige Vorbereitung zur Aufnahme von Ersatzzähnen auf der linken Seite in den Positionen 4, 5 und 6. Die nächste Stufe wird mit 7 f abgebildet. In die Implantate sind auf der linken Seite die Ersatzzähne in die Implantate eingesetzt, während auf der rechten Seite die Knochenregenerierung als Planziel dieser Stufe erkennbar ist. Sobald diese Knochenregenerierung es zuläßt, werden auf der rechten Seite Implantate in die Position 4, 5, 6 und 7 gemäß Abbildung 7 g eingesetzt.

Die Abbildung 7 h zeigt das Behandlungsziel, welches insoweit als Unterkieferbild der oben beschriebenen Figur 5 als Frontalbild entspricht. Lediglich die Zählweise der Zahnpositionen weichen nach der üblichen Zahnarztpraxis voneinander ab. Trotz dieser Abweichung der Zählweise kann der Rechner so eingerichtet werden, daß mit demselben Ergebnis der Behandlungsplan unabhängig davon aufgestellt wird, ob nur eine Horizontal- oder eine Frontalbehandlung oder beide zusammen vorgenommen werden.

Die Figur 8 zeigt einen gegenüber der Bezugszahl 150 abgewandelten Behandlungsplan mit dem Befund und der vorgesehenen Therapie in der Frontal- und Horizontalebene.

## Patentansprüche

1. Verfahren zum computergestützten Erstellen eines Behandlungsplanes für eine zahnärztliche Behandlung mit einer anfänglichen Bestandsaufnahme durch digitalisierte oder digitalisierbare Röntgenaufnahmen, welche vorzugsweise eine in ihrer Größe genormte Meßkugel oder eine andere Bezugsgröße einschließt,
gekennzeichnet durch folgende Schritte
a) Emulieren der digitalisierten Bestandsaufnahme in ein in einem Bildspeicher abgelegtes zweidimensionales Bild eines Standardgebisses in derselben zweidimensionalen Ebene der digitalisierten Bestandsaufnahme, wobei die Größe des Bildes der digitalisierten Bestandsaufnahme und die Lage der Zähne in diesem Bild in die Größe und Lage des unterlegten Bildes des Standardgebisses gebracht werden,
b) Anpassung des Bildes des emulierten Standardgebisses an die geometrischen Proportionen der Darstellungsebene mit Hilfe zumindest einer im Bildspeicher abgelegten und hieraus in die Darstellung eingespiegelten Meßskala mit Hilfe eines im Computer vorhandenen Rechenwerks, so daß ein der anfänglichen Bestandsaufnahme entsprechendes Bild im Format des Standardgebisses entsteht,
c) Entfernen der Darstellung von nicht mehr in der Bestandsaufnahme vorhandenen Zähnen in der Darstellung des Standardgebisses,
d) Anpassen der Konfiguration der vorhandenen Knochensubstanz in der angepaßten Darstellung in Form eines Standardgebisses,
e) gleichzeitiges Aufrufen von Textbausteinen aus dem Computer und Ablage in einem Zwischenspeicher im Computer zum Beschreiben der festgestellten Defekte,
f) Einsetzen von Bildsymbolen aus einem Symbolspeicher des Computers in die angepaßte Darstellung, wobei die Bildsymbole den vorzunehmenden Behandlungsschritten entsprechen,
g) gleichzeitiges Aufrufen von Beschreibungen der erforderlichen Behandlungsschritte aus dem Vorrat an Textbausteinen im Computer,
h) gleichzeitiges Aufrufen von Honorarsätzen der Kosten der erforderlichen Behandlungsschritte aus dem Computer, Ablage und Sammeln aller anfallenden Bild-, Text- und Honorarsatzdateien in dem Zwischenspeicher des Computers,
i) Ausdrucken eines Behandlungsplans (150, 151) mit zumindest einer Abbildung des festgestellten Bestandes in standardisierter Form und zumindest einer Abbildung des Behandlungsziels in standardisierter Form und einer Textbeschreibung der notwendigen Behandlungsschritte mit den dazugehörigen sowie aufsummierten Honorarsätzen.

2. Verfahren gemäß Anspruch 1, dadurch gekennzeichnet, daß statt einer Bestandsaufnahme in der Frontalebene eine Bestandsaufnahme in der Horizontalebene stattfindet und der Behandlungsplan Abbildungen in dieser Ebene aufweist.

3. Verfahren gemäß Anspruch 1, dadurch gekennzeichnet, daß eine Bestandsaufnahme sowohl in der Frontalebene als auch in der Horizontalebene stattfindet und der einheitliche Behandlungsplan koordiniert wird sowie Abbildungen in beiden Ebenen aufweist.

4. Verfahren nach einem oder mehreren voraufgehenden Ansprüche, dadurch gekennzeichnet, daß die Abbildungen auf dem Bildschirm und im ausgedruckten Behandlungsplan symbolhaft farbig sind.

## Claims

1. A process for the computer-based elaboration of a treatment scheme for a dental treatment, including an initial taking of the stock of teeth by means of digitized or digitizable X-ray images, which preferably involves a measuring ball of standardized size or any other reference magnitude, wherein said process comprises the following steps:
a) emulating the digitized stock-taking result into a two-dimensional image, stored in an image storage, of a standard set of teeth in the same two-dimensional plane in which the digitized stock-taking was done, with the size of the image of said digitized stock-taking result and the location of the teeth in this image being brought into alignment with those of the underlaid image of said standard set of teeth,
b) adapting said image of said emulated standard set of teeth to the geometric proportions of the display plane by means of at least one measuring scale stored in the image storage and from there faded into the image shown, by means of an arithmetic unit present in the computer, so as to create an image having the format of the standard set of teeth and corresponding to the initial stock-taking result,
c) removing the display of teeth no longer present in the stock-taking result from the display of the standard set of teeth,
d) adapting the configuration of the present bone matter in the adapted display in the form of a standard set of teeth,
e) simultaneously calling in text modules from the computer and storing them in an intermediate memory in the computer for describing the defects detected,
f) inserting image symbols from a symbol storage of the computer into the adapted display, said image symbols corresponding to the treatment steps to be taken,
g) simultaneously calling in descriptions of the required treatment steps from the text module supply stored in the computer,
h) simultaneously calling in fee rates of the costs of the required treatment steps from the computer, storing and collecting any arising image, text and fee rate files in the intermediate memory of the computer,
i) printing out a treatment scheme (150, 151) including at least one image of the determined stock of teeth in standardized form and at least one image of the treatment aim in standardized form and a text describing the required treatment steps with the associated as well as summed up fee rates.

2. The process as claimed in claim 1 wherein, instead of taking the stock of teeth in the frontal plane, the stock-taking is done in the horizontal plane, and said treatment scheme contains images in this plane.

3. The process as claimed in claim 1 wherein the stock-taking is done both in the frontal plane and in the horizontal plane, and the uniform treatment scheme is coordinated and contains images in both planes.

4. The process as claimed in one of the preceding claims wherein said images on the screen and in the printed treatment scheme appear in the form of symbols and in color.

## Revendications

1. Procédé pour établir avec l'assistance de l'ordinateur un plan de traitement pour soins dentaires, comprenant une analyse initiale de l'état au moyen de radiographies digitalisées ou digitalisables, incluant de préférence une boule de mesurage standardisée de par sa taille ou autre paramètre de référence,
caractérisé par les mesures suivantes
a) émulsion de l'analyse digitalisée de l'état en une image bidimensionnelle d'une dentition standard enregistrée dans une mémoire d'images sur le même plan bidimensionnel que l'analyse de l'état, la taille de l'image de l'analyse digitalisée de l'état et la position des dents étant amenées dans la taille et la position de l'image de base de la dentition standard,
b) adaptation de l'image de la dentition émulsionnée aux proportions géométriques du plan de représentation à l'aide d'au moins une échelle de mesure enregistrée dans la mémoire d'images et insérée dans la représentation au moyen d'une unité arithmétique présente dans l'ordinateur, de manière à ce qu'une image correspondante à l'analyse initiale de l'état soit générée au format de la dentition standard,
c) radiation de la représentation de dents n'existant plus dans l'analyse de l'état, dans la représentation de la dentition standard,
d) adaptation de la configuration de la substance osseuse existante, sous forme d'une dentition standard dans la représentation adaptée,
e) appel simultané de modules de texte de l'ordinateur, et dépôt dans une mémoire intermédiaire de l'ordinateur pour la description des défauts déterminés,
f) insertion dicones d'une mémoire d'icones de l'ordinateur dans la représentation adaptée, lesdits icones correspondant aux mesures du traitements à suivre,
g) appel simultané de descriptions des mesures nécessaires pout le traitement d'un stock de modules de texte de l'ordinateur,
h) appel simultané de taux d'honoraires des coûts du traitement de l'ordinateur, dépôt et collection dans la mémoire intermédiaire de l'ordinateur de tous les fichiers d'images, de textes et de taux d'honoraires occasionnels,
i) sortie sur imprimante d'un plan de traitement (150, 151) comprenant au moins une représentaion sous forme standardisée de l'état constaté, et au moins une représentation sous forme standardisée du but du traitement, et au moins une description textuelle des mesures de traitement nécessaires incluant les taux d'honoraires totalisés et associés.

2. Procédé suivant la revendication 1, caractérisé en ce qu'au lieu d'une analyse de l'état dans le plan frontal, une analyse de l'état dans le plan horizontal est effectuée et incluse dans le plan de traitement sous forme de représentations dudit plan frontal.

3. Procédé suivant la revendication 1, caractérisé en ce qu'une analyse de l'état est effectuée aussi bien dans le plan frontal que dans le plan horizontal, et que le plan de traitement uniforme est coordonné et comprend des représentations desdits deux plans.

4. Procédé suivant une ou plusieurs des revendications précédentes, caractérisé en ce que les représentations sur l'écran et dans le plan de traitement sont symbolisées par couleur.
